# EUROPÄISCHE PATENTSCHRIFT

(11) **EP 2 404 774 B1**
(45) Veröffentlichungstag und Bekanntmachung des Hinweises auf die Patenterteilung: **16.01.2013**
(21) Anmeldenummer: 11005417.8
(22) Anmeldetag: 01.07.2011
(51) Int. Cl.: B60J 7/06

(54) **Dachkappe für ein Faltverdeck**
Top bow for a collapsible roof
Capot de toit pour un toit escamotable

(30) Priorität: 07.07.2010 DE 102010027198
(43) Veröffentlichungstag der Anmeldung: 11.01.2012
(73) Patentinhaber: Magna Car Top Systems GmbH, 74321 Bietigheim-Bissingen (DE)
(72) Erfinder: Careni, Claus, 74321 Bietigheim-Bissingen (DE); Ziethe, Axel, 70176 Stuttgart (DE)
(74) Vertreter: Völger, Silke Beatrix

(56) Entgegenhaltungen:
- EP-A1- 1 897 727
- WO-A1-99/39932
- US-B1- 6 695 385

## Beschreibung

Die Erfindung bezieht sich auf eine Dachkappe für ein Faltverdeck eines Personenkraftwagens, nach dem Oberbegriff des Patentanspruchs 1.

Es ist ein für eine Dachöffnung ausgebildetes Faltschiebedach eines Personenkraftwagens bekannt, DE 39 02 707 C2, das in einem einem oberen Querträger eines Windschutzscheibenrahmes zugekehrten Bereich eine bewegliche Dachkappe aus festem Werkstoff aufweist. Die Dachkappe wirkt mit einer Steuereinrichtung zusammen, die jeweils ein an Längsseiten der Dachkappe angebrachtes Lenkersystem umfasst, das als Hebelwerk ausgebildet ist. Jedes Hebelwerk ist mit einem vorderen Lenker und einem hinteren Lenker versehen, die eine dreieckige Form aufweisen. Der vordere Lenker ist auf der einen Seite mit einem Lagerzapfen in einer Kulisse der Dachkappe gelagert. Auf der davon abgekehrten Seite ist der vordere Lenker einerseits mit einem Lagerzapfen an einem Schieber und andererseits mit einem Lagerzapfen in einer Kulisse schwenkbeweglich gelagert. Der hintere Lenker ist auf der zu der Dachkappe hin gerichteten Seite mit einem Lagerzapfen mit der Dachkappe verbunden, wobei die hiervon entfernt liegende Seite des besagten hinteren Lenkers zum einen mittels eines Lagerzapfens in einer Kulisse und zum anderen unter Vermittlung eines Lagerzapfens an einer Führungsschiene angebracht ist.

Gemäß der EP 0 419 140 A1 weist ein Kraftfahrzeug ein Faltschiebedach auf, das in eine Dachöffnung eines Aufbaus des Kraftfahrzeugs eingebaut ist und von einer Schließstellung in eine Offenstellung bewegbar ist und umgekehrt. Das Faltschiebedach umfasst mehrere einen Verdeckbezug in Falten verbringbare Faltspriegel und eine benachbart eines Windschutzscheibenrahmens des Aufbaus verlaufende Dachkappe, die aus formsteifem Werkstoff besteht. Diese Dachkappe liegt mit einem plattenförmigen Abschnitt auf einer Dichtung des Windschutzscheibenrahmens auf -Fig. 11 und 12-. Und besagte Dachkappe ist an einer Steuereinrichtung angelenkt, über die diese Dachkappe zwischen einer abgesenkten Position und einer aufgestellten Position verstellbar ist. Die Steuereinrichtung besitzt eine jeweils an Längsseiten der Dachkappe vorgesehene Steuerkonsole mit einer Kulisse für einen Steuerzapfen. Kulisse und Steuerzapfen bewirken, dass die Dachkappe in Abhängigkeit der Stellung des Faltschiebedachs abgesenkt oder angehoben wird.

Aufgabe der Erfindung ist es, eine Dachkappe für ein Faltverdeck eines Personenkraftwagens zu konzipieren, die bei guter Bewegungsfunktion sowohl in der Schließstellung wie auch in der Offenstellung funktionsgerecht festegelegt ist. Dabei sollte aber auch sichergestellt sein, dass ein Steuermechanismus zum Verstellen der Dachkappe sich durch Einfachheit und leichte Umsetzbarkeit auszeichnet.

Erfindungsgemäß wird diese Aufgabe durch die Merkmale des Patenanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass die Steuereinrichtung und das erste sowie das zweite Verriegelungssystem der Dachkappe Maßstäbe bezüglich Bewegungs- und Festsetzfunktionen setzt. Dabei sind sowohl die Steuereinrichtung wie auch die Verriegelungssysteme mit einfachen Mitteln umsetzbar, die sich mit relativ geringem Raumanspruch in das Faltverdeck bzw. den Aufbau integrieren lassen. So trägt die Nutzung einer an sich vorhandenen Führungsschiene, z. B. für Führungsspriegel des Faltverdecks, dazu bei, dass die Beeinflussung der Steuereinrichtung und auch der Verrieglungssysteme auf vorbildliche Weise erfolgt. Schließlich lassen sich Bauteile der Steuereinrichtung und der Verriegelungssysteme aufwandsarm herstellen.

In der Zeichnung wird ein Ausführungsbeispiel der Erfindung gezeigt, das nachstehend näher erläutert wird.

### Es zeigen

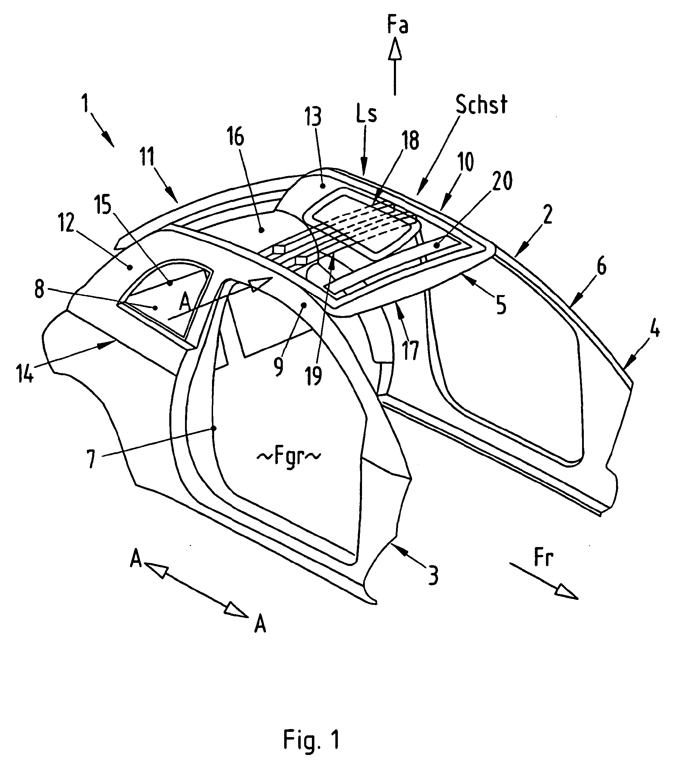

Fig. 1 eine Schrägansicht von rechts oben auf einen schematisch abgebildeten Personenkraftwagen mit einem eine Dachkappe aufweisenden Faltverdeck,

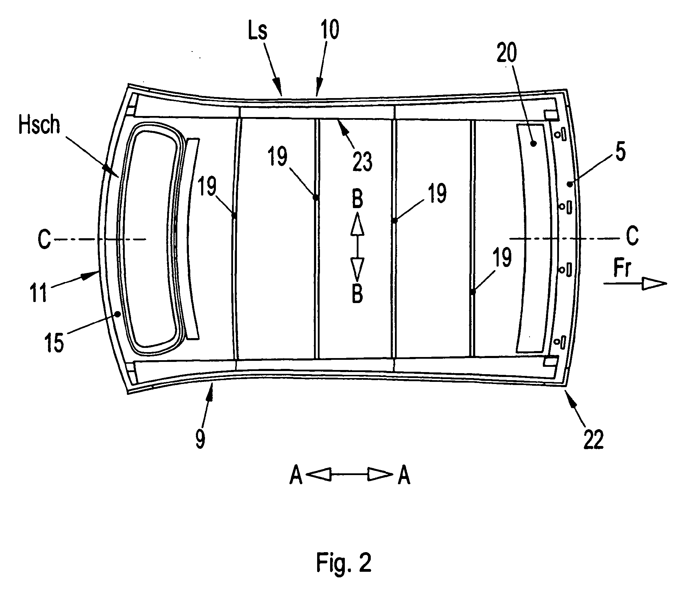

Fig. 2 eine Ansicht von oben auf das Dach des Personenkraftwagens gemäß Fig. 1,
Fig. 3 eine Schrägansicht von hinten rechts auf die Dachkappe in Schließstellung,
Fig. 4 eine Ansicht etwa entsprechend Fig. 3, jedoch die Dachkappe in einer ersten Zwischenstellung,
Fig. 5 eine Ansicht etwa entsprechend Fig. 4, jedoch die Dachkappe in einer zweiten Zwischenstellung,
Fig. 6 eine Ansicht etwa entsprechend Fig. 5, jedoch die Dachkappe in Offenstellung.

Von einem Personenkraftwagen 1 ist ein Aufbau 2 mit gegenüberliegenden Seitenwänden 3 und 4 und einem oberen Querträger 5 eines Windschutzscheibenrahmens 6 dargestellt. Die je eine Türöffnung 7 und eine Fensteröffnung 8 aufweisenden Seitenwände 3 und 4, die aufrecht stehen und fest mit dem Aufbau 2 verbunden sind, umfassen Dachseitenträger 9 und 10. Letztere gehen in einem rückwärtigen Bereich 11 des Aufbaus 2 in Säulen 12 und 13 über und stoßen auf eine etwa horizontal verlaufende Gürtellinie 14 des Aufbaus 2. Die Dachseitenträger 9 und 10, der obere Querträger 5 und ein benachbart der Gürtellinie 14 verlaufendes hinteres Querteil 15 des Aufbaus 2 begrenzen eine Dachöffnung 16, in der ein bewegliches Dach 17 in Fahrzeuglängsrichtung A-A verschiebbar angeordnet ist; die Fahrtrichtung ist mit Fr bezeichnet und eine Heckscheibe mit Hsch.

Das Dach 17 ist nach Art eines einen Fahrgastraum Fgr überwölbenden Faltverdecks 18 aufgebaut, z. B. in der US 3,658, 378 und DE 807 874 beschrieben, und zwischen einer Schließstellung und einer Offenstellung bewegbar. In der Offenstellung des Faltverdecks 18 ist letzteres in Falten gelegt. Hierzu ist das Faltverdeck 18 mit einer Anzahl in Fahrzeugquerrichtung B-B verlaufender und in Fahrzeuglängsrichtung A-A beabstandeter stangenartiger Spriegel 19 versehen.

Benachbart des oberen Querträgers 5 des Windschutzscheibenrahmens 6 erstreckt sich über die Breite der Dachöffnung 16 eine Dachkappe 20, die unter Vermittlung eines Steuermechanismus 21 zusammen mit dem Faltverdeck 18 zwischen einer Schließstellung Schst und einer Offenstellung Ost verstellbar ist. Das Faltverdeck 18 ist in einen Rahmen 22 des Aufbaus 2 eingesetzt. Der Steuermechanismus 21 ist je Längsseite Ls des Faltverdecks 18 benachbart einer fest mit dem Aufbau 2 bzw. dem Dach 17 verbundenen Führungsschiene 23 mit einem -in Fahrtrichtung Fr gesehen- einen vorderen Steuerlenker 24 und einen hinteren Steuerlenker 25 aufweisenden Viergelenkhebelwerk 26 versehen. Die Steuerlenker 24 und 25 sind einerseits an einer oberen Lagerkonsole 27 der Dachkappe 20 und andererseits an einer unteren Lagerkonsole 28 eines ersten Gleitgliedes 29 angelenkt, das von der Führungsschiene 23 aufgenommen und in Fahrzeuglängsrichtung A-A verschiebbar ist.

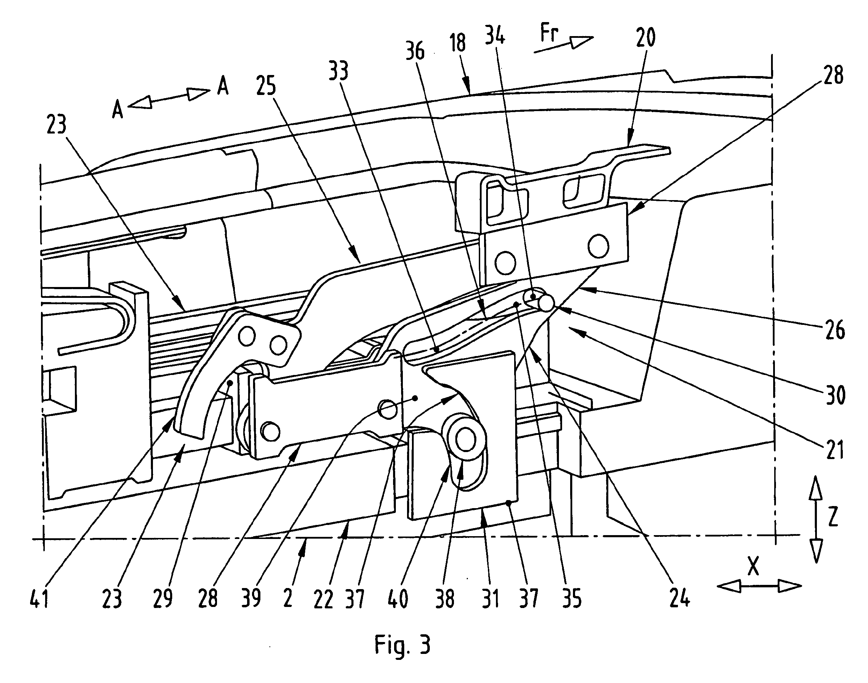

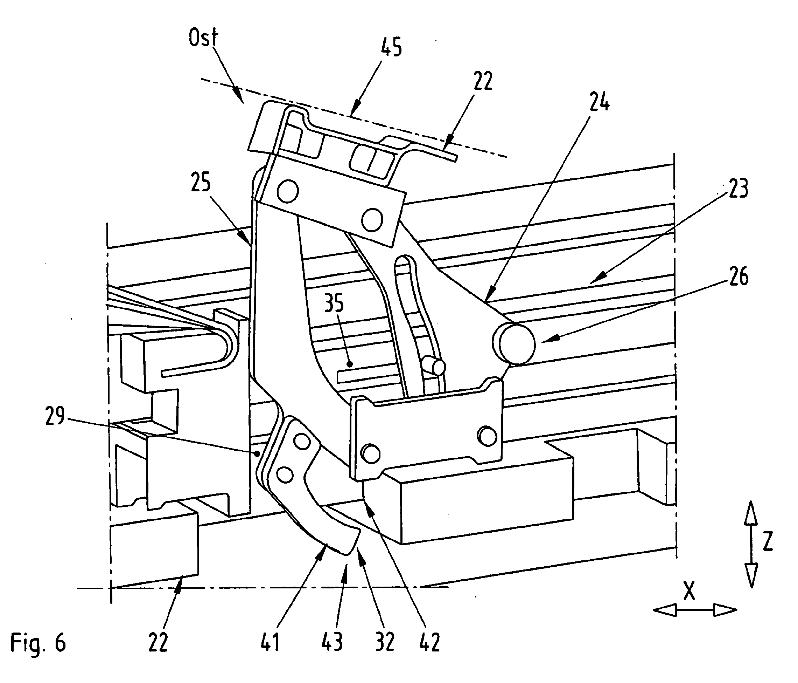

Das Viergelenkhebelwerk 26 ist mit einer Steuereinrichtung 30 für die Dachkappe 20 versehen, und die Dachkappe 20 ist unter Vermittlung eines ersten Verriegelungssystems 31 für die Schließstellung Schst und eines zweiten Verriegelungssystems 32 für die Offenstellung Ost festlegbar. Das erste Verriegelungssystem 31 -Fig. 3- und das zweite Verriegelungssystem 32 -Fig. 6- sind zwischen Viergelenkhebelwerk 26 und dem Rahmen 22 wirksam.

Die Steuereinrichtung 30 umfasst eine erste Steuerkulisse 33 im vorderen Steuerlenker 24. In der Steuerkulisse 33 ist ein erster Steuerzapfen 34 beweglich, der an einem über die Führungsschiene 23 verschiebbaren zweiten Gleitglied 35 befestigt ist. Das zweite Gleitglied 35 wird bspw. in Fahrzeuglängsrichtung A-A mittels eines nicht dargestellten Steigekabels -nicht gezeigt- verstellt. Darüber hinaus ist die erste Steuerkulisse 33 in der Weise ausgebildet, dass sie in etwa einer in Längsrichtung des vorderen Steuerlenkers 24 verlaufenden Geraden 36 folgt.

Das erste Verriegelungssystem 31 -Fig. 3- besitzt eine fest am Rahmen 22 des Aufbaus 2 angebrachte zweite Steuerkulisse 37, in der ein zweiter ein- und ausrückbarer Steuerzapfen 38 beweglich ist. Hierzu ist die zweite Steuerkulisse 37 mit einer Kulissenmündung 39 für den zweiten Steuerzapfen 38 versehen. Der zweite Steuerzapfen 38 ist am vorderen Steuerlenker 24 angebracht, wobei in der Schließstellung Schst der Dachkappe 20 der zweite Steuerzapfen 38 mit einem Bahnabschnitt 40 der zweiten Steuerkulisse 37 derart verspannt ist, dass die Dachkappe 20 festgesetzt ist.

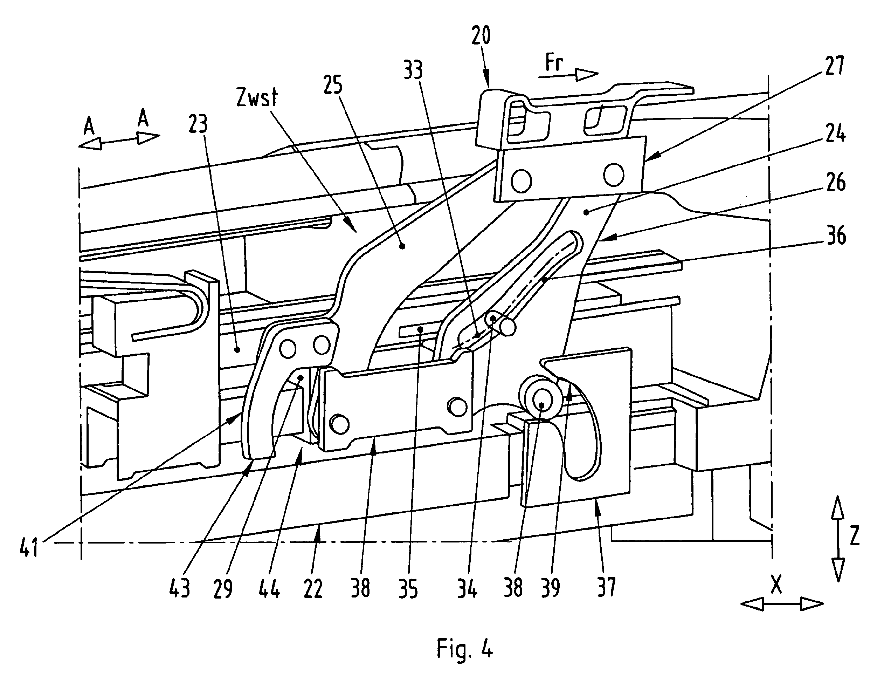

Das zweite Verriegelungssystem 32 -Fig. 6- umfasst einen am hinteren Steuerlenker 25 gehaltenen Rasthaken 41, der in der Offenstellung Ost der Dachkappe 20 einen Stützabschnitt 42 an dem Rahmen 22 des Aufbaus 2 so hintergreift, dass besagte Dachkappe 20 in der Offenstellung Ost lagemäßig fixiert ist. Der Rasthaken 41 ist mit einer Hakenspitze 43 versehen, die in Zwischenstellungen Zwst zwischen Schließstellung Schst und Offenstellung Ost der Dachkappe 20 sich auf einer Führungsbahn 44 des Rahmens 22 abstützt -Fig. 4-, wodurch gesichert ist, dass das Viergelenkhebelwerk 26 in einer definierten Lage verbleibt.

Fig. 3 zeigt die Dachkappe 20 in der Schließstellung Schst. Der erste Steuerzapfen 33 drückt den vorderen Steuerlenker 24 über die erste Steuerkulisse 33 in eine Endlage -in Richtung Z-, die der Schließstellung Schst der Dachkappe 20 entspricht. Dabei drückt der zweite Steuerzapfen 37 gegen den Bahnabschnitt 40 der zweiten Steuerkulisse 37 und bewirkt eine Kraft in Richtung X. Damit ist die Dachkappe 20 in den Richtungen X und Z festgelegt. Unter diesen Voraussetzungen ist der Rasthaken 41 funktionslos.

In Fig. 4 ist das zweite Gleitglied 35 um einen relativ geringen Betrag entgegen der Fahrtrichtung Fr verschoben, will heißen, der zweite Steuerzapfen 38 ist in die Kulissenmündung 38 bewegt und die Steuerhebel 24 und 25 des Viergelenkhebelwerks 26 sind mittels der Steuereinrichtung 30 angehoben. Die Hakenspitze 43 stützt sich auf der Führungsbahn 44 des Rahmens 22 ab.

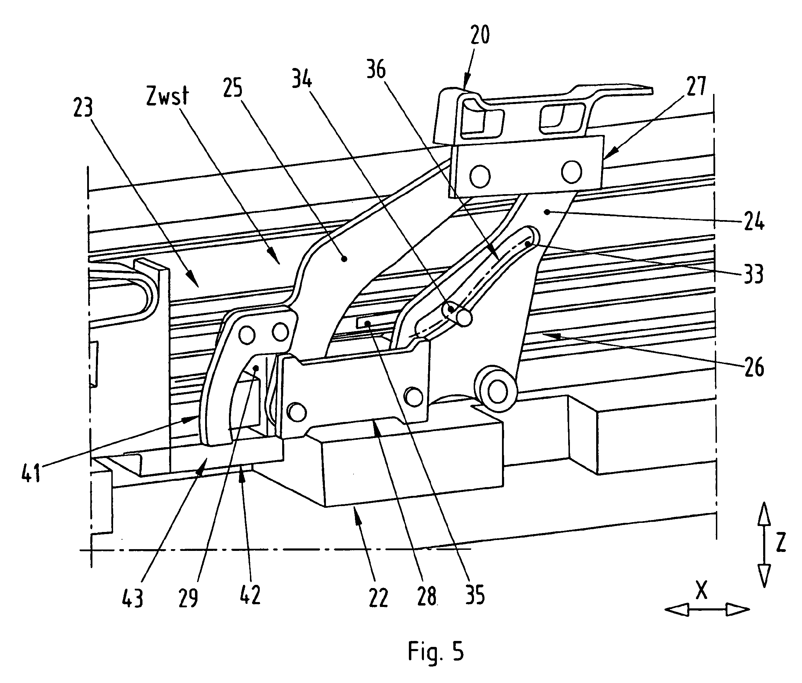

Aus der Fig. 5 ist ersichtlich, dass das Hebelwerk 26 mit der Dachkappe 20 so weit entgegen der Fahrtrichtung Fr bewegt ist, dass der Eingriff des Rasthakens 41 in den Stützabschnitt 42 des Rahmens 22 kurz bevorsteht. Schließlich gibt die Fig. 6 wieder, dass das zweite Verriegelungssystem 32 aktiv und die festgesetzte Dachkappe 20 in Fahrtrichtung schräg von oben nach unten ausgerichtet ist -Ebene 45-.

## Patentansprüche

1. Dachkappe für ein Faltverdeck eines Personenkraftwagens, die benachbart eines oberen Querträgers eines Windschutzscheibenrahmens eines Aufbaus verläuft und über einen Steuermechanismus des zwischen einer Schließstellung und einer Offenstellung bewegbaren, in einen Rahmen des Aufbaus eingesetzten Faltverdecks verstellbar ist, wobei der Steuermechanismus je Längsseite der Dachkappe -in Fahrtrichtung betrachtet- ein einen vorderen Steuerlenker und einen hinteren Steuerlenker umfassendes Viergelenkhebelwerk aufweist, welche Steuerlenker einerseits an der Dachkappe und andererseits an einem von einer Führungsschiene aufgenommenen ersten Gleitglied gelagert sind, **dadurch gekennzeichnet, dass** das Viergelenkhebelwerk (26) mit einer Steuereinrichtung (30) für die Dachkappe (20) versehen ist, welche Dachkappe (20) unter Vermittlung eines ersten Verriegelungssystems (31) für die Schließstellung (Schst) und eines zweiten Verriegelungssystems (32) für die Offenstellung (Ost) festlegbar ist.

2. Dachkappe nach Anspruch 1, **dadurch gekennzeichnet, dass** das erste Verriegelungssystem (31) und das zweite Verriegelungssystem (32) zwischen dem Viergelenkhebelwerk (26) und dem Rahmen (22) des Aufbaus (2) wirksam sind.

3. Dachkappe nach Anspruch 1, **dadurch gekennzeichnet, dass** die Steuereinrichtung (30) für die Dachkappe (20) eine erste Steuerkulisse (33) im vorderen Steuerlenker (24) und einen in besagter Steuerkulisse (33) geführten ersten Steuerzapfen (34) umfasst.

4. Dachkappe nach den Ansprüchen 1 und 3, **dadurch gekennzeichnet, dass** der erste Steuerzapfen (34) an einem in Fahrzeuglängsrichtung (A-A) beweglichen, mit der Führungsschiene (23) zusammenarbeitenden zweiten Gleitglied (35) vorgesehen ist.

5. Dachkappe nach Anspruch 1, **dadurch gekennzeichnet, dass** die erste Steuerkulisse (33) einer relativ Geraden (36) in Längsrichtung des vorderen Steuerlenkers (24) folgt.

6. Dachkappe nach Anspruch 1, **dadurch gekennzeichnet, dass** das erste Verriegelungssystem (31) eine zweite fest am Rahmen (20) des Aufbaus (2) angebrachte zweite Steuerkulisse (37) besitzt, die mit einem ein- und ausrückbaren zweiten Steuerzapfen (38) versehen ist, welcher zweite Steuerzapfen (38) am vorderen Steuerlenker (24) angeordnet ist.

7. Dachkappe nach den Ansprüchen 1 und 6, **dadurch gekennzeichnet, dass** der zweite Steuerzapfen (38) in der Schließstellung (Schst) der Dachkappe (20) mit einem Bahnabschnitt (40) der zweiten Steuerkulisse (37) verspannt ist.

8. Dachkappe nach Anspruch 1, **dadurch gekennzeichnet, dass** das zweite Verriegelungssystem (32) einen Rasthaken (41) umfasst, der in der Offenstellung (Ost) der Dachkappe (20) einen Stützabschnitt (42) an dem Rahmen (22) des Aufbaus (2) hintergreift.

9. Dachkappe nach den Ansprüchen 1 und 8, **dadurch gekennzeichnet, dass** der Rasthaken (41) fest am hinteren Steuerlenker (25) angebracht ist.

10. Dachkappe nach Anspruch 8 oder 9, **dadurch gekennzeichnet, dass** der Rasthaken (41) in Zwischenstellungen (Zwst) zwischen Schließstellung (Schst) und Offenstellung (Ost) der Dachkappe (20) sich mit einer Hakenspitze (43) auf einer Führungsbahn (44) des Rahmens (22) des Aufbaus (22) abstützt.

## Claims

1. Top bow for a collapsible roof of a passenger vehicle, said cap running adjacent to an upper cross member of a windscreen frame of a body and being adjustable via a control mechanism of the collapsible roof, which is movable between a closed position and an open position and is inserted into a frame of the body, wherein, for each longitudinal side of the top bow - as viewed in the direction of travel - the control mechanism has a four-bar lever apparatus comprising a front control link and a rear control link, said control links being mounted at one end on the top bow and at the other end on a first sliding element accommodated by a guide rail, **characterized in that** the four-bar lever apparatus (26) is provided with a control device (30) for the top bow (20), which top bow (20) is fixable for the closed position (Schst) with the aid of a first locking system (31) and for the open position (Ost) with the aid of a second locking system (32).

2. Top bow according to Claim 1, **characterized in that** the first locking system (31) and the second locking system (32) are effective between the four-bar lever apparatus (26) and the frame (22) of the body (2).

3. Top bow according to Claim 1, **characterized in that** the control device (30) for the top bow (20) comprises a first control slot (33) in the front control link (24) and a first control pin (34) guided in said control slot (33).

4. Top bow according to Claims 1 and 3, **characterized in that** the first control pin (34) is provided on a second sliding element (35) which is movable in the longitudinal direction (A-A) of the vehicle and interacts with the guide rail (23).

5. Top bow according to Claim 1, **characterized in that** the first control slot (33) follows a relatively straight line (36) in the longitudinal direction of the front control link (24).

6. Top bow according to Claim 1, **characterized in that** the first locking system (31) has a second control slot (37) which is mounted fixedly on the frame (20) of the body (2) and is provided with a second control pin (38) which can be engaged and disengaged, which second control pin (38) is arranged on the front control link (24).

7. Top bow according to Claims 1 and 6, **characterized in that**, in the closed position (Schst) of the top bow (20), the second control pin (38) is braced by a track section (40) of the second control slot (37).

8. Top bow according to Claim 1, **characterized in that** the second locking system (32) comprises a latching hook (41) which, in the open position (Ost) of the top bow (20), grips behind a supporting section (42) on the frame (22) of the body (2).

9. Top bow according to Claims 1 and 8, **characterized in that** the latching hook (41) is mounted fixedly on the rear control link (25).

10. Top bow according to Claim 8 or 9, **characterized in that** the latching hook (41) is supported in intermediate positions (Zwst) between the closed position (Schst) and the open position (Ost) of the top bow (20) by a hook tip (43) on a guide track (44) of the frame (22) of the body (2).

## Revendications

1. Capot de toit pour un toit escamotable d'une voiture automobile, qui s'étend à proximité d'une traverse supérieure d'un cadre de pare-brise d'une carrosserie et peut être déplacé au moyen d'un mécanisme de commande de la capote escamotable insérée dans un cadre de la carrosserie et mobile entre une position de fermeture et une position d'ouverture, le mécanisme de commande comprenant pour chaque côté longitudinal du capot de toit, considéré dans la direction de conduite, un mécanisme à leviers à quatre articulations comportant un bras de commande avant et un bras de commande arrière, lesquels bras de commande sont montés d'une part sur le capot de toit et d'autre part sur un premier élément de glissement reçu par un rail de guidage, **caractérisé en ce que** le mécanisme à leviers à quatre articulations (26) est pourvu d'un dispositif de commande (30) pour le capot de toit (20), lequel capot de toit (20) peut être fixé par l'intermédiaire d'un premier système de verrouillage (31) pour la position de fermeture (Schst) et d'un deuxième système de verrouillage (32) pour la position d'ouverture (Ost).

2. Capot de toit selon la revendication 1, **caractérisé en ce que** le premier système de verrouillage (31) et le deuxième système de verrouillage (32) agissent entre le mécanisme à leviers à quatre articulations (26) et le cadre (22) de la carrosserie (2).

3. Capot de toit selon la revendication 1, **caractérisé en ce que** le dispositif de commande (30) pour le capot de toit (20) comporte une première coulisse de commande (33) dans le bras de commande avant (24) et un premier ergot de commande (34) guidé dans ladite coulisse de commande (33).

4. Capot de toit selon les revendications 1 et 3, **caractérisé en ce que** le premier ergot de commande (34) est prévu sur un deuxième élément de glissement (35) mobile dans la direction longitudinale du véhicule (A-A) et coopérant avec le rail de guidage (23).

5. Capot de toit selon la revendication 1, **caractérisé en ce que** la première coulisse de commande (33) suit une ligne relativement droite (36) dans la direction longitudinale du bras de commande avant (24).

6. Capot de toit selon la revendication 1, **caractérisé en ce que** le premier système de verrouillage (31) possède une deuxième coulisse de commande (37) montée fixement sur le cadre (20) de la carrosserie (2), laquelle deuxième coulisse de commande est pourvue d'un deuxième ergot de commande (38) pouvant être engagé et désaccouplé, lequel deuxième ergot de commande (38) est disposé sur le bras de commande avant (24).

7. Capot de toit selon les revendications 1 et 6, **caractérisé en ce que** le deuxième ergot de commande (38) est serré par une section de voie (40) de la deuxième coulisse de commande (37) dans la position de fermeture (Schst) du capot de toit (20).

8. Capot de toit selon la revendication 1, **caractérisé en ce que** le deuxième système de verrouillage (32) comporte un crochet d'encliquetage (41) qui vient en prise par l'arrière avec une section d'appui (42) sur le cadre (22) de la carrosserie (2) dans la position d'ouverture (Ost) du capot de toit (20).

9. Capot de toit selon les revendications 1 et 8, **caractérisé en ce que** le crochet d'encliquetage (41) est monté fixement sur le bras de commande arrière (25).

10. Capot de toit selon la revendication 8 ou 9, **caractérisé en ce que** le crochet d'encliquetage (41) s'appuie par l'intermédiaire d'une pointe de crochet (43) sur une voie de guidage (44) du cadre (22) de la carrosserie (2) dans des positions intermédiaires (Zwst) entre la position de fermeture (Schst) et la position d'ouverture (Ost) du capot de toit (20).
